# EUROPEAN PATENT SPECIFICATION

(11) **EP 1 550 226 B1**
(45) Date of publication and mention of the grant of the patent: **09.01.2008**
(21) Application number: 03776252.3
(22) Date of filing: 07.10.2003
(51) Int. Cl.: H04Q 7/38

(54) **QUALITY OF SERVICE MAPPING BETWEEN VARIOUS TYPES OF WIRELESS COMMUNICATION SYSTEMS**
DIENSTQUALITÄTABBILDUNG ZWISCHEN VERSCHIEDENEN ARTEN DRAHTLOSER KOMMUNIKATIONSSYSTEME
MISE EN CORRESPONDANCE DE LA QUALITE DE SERVICE ENTRE DIVERS TYPES DE SYSTEMES DE COMMUNICATION SANS FIL

(30) Priority: 08.10.2002 US 417088 P
(43) Date of publication of application: 06.07.2005
(60) Divisional application: 07121715.2
(73) Proprietor: INTERDIGITAL TECHNOLOGY CORPORATION, Wilmington, DE 19810 (US)
(72) Inventor: HUNKELER, Teresa, Joanne, Montreal, Québec H4A 2V1 (CA); OZLUTURK, Fatih, Port Washington, NY 11050 (US)
(74) Representative: Pierrou, Mattias
(86) International application number: PCT/US2003/031933
(87) International publication number: WO 2004/034592

(56) References cited:
- EP-A- 1 154 599
- WO-A-00/78081
- WO-A-01/76286
- US-A- 6 005 852
- US-A1- 2002 037 749
- US-A1- 2002 132 611
- US-B1- 6 205 125

## Description

FIELD OF INVENTION

The present invention generally relates to wireless communication systems. More specifically, the present invention relates to quality of service in wireless communication systems.

BACKGROUND OF THE INVENTION

The particular type of wireless communication system over which wireless transmit/receive units (WTRUs) operate may vary. For example, users may travel from one area where a particular type of wireless communication system is deployed to another area where a different type of wireless communication system is deployed. Additionally, users may be located in an area where they have the option of choosing between two or more types of wireless communication systems.

Quality of service requirements are provided in wireless communication systems for various types of services to ensure that the various types of services are supported at reasonable performance levels. These quality of service requirements, however, do not exist in some systems, are defined differently in different systems, and are often inadequately defined. For example, a particular type of service in one system may be supported at a quality of service that is based on a certain frame error rate (FER). The quality of service, however, for that same service in another system may be inadequately defined or defined with a quality of service that is based on a different parameter such as, for example, signal-to-interference ratio (SIR), average number of packet repeats, or any other parameter other than FER. This poses problems for operating WTRUs across different types of wireless communication systems.

It would therefore be desirable to provide mapping between various types of wireless communication systems to ensure seamless operation across systems.

US patent application having publication number 2002/132611 discloses a user of a first radio access network roaming into a second radio access network. The operator of the second network has to know subscriber data, e.g. data related to quality of service; that the user- agreed upon with the first network in order to provide adequate services. The operator of the first network, with which a subscriber using a user equipment is registered, stores a subscriber specific service profile and when the user accesses the second network, the second network controls the services and local network resources in accordance with the subscriber profile provided by the first network. All processing is then carried out exclusively in the second network, which maps values of service attributes to service functions used in the second network for a requested transmission, since the employed attributes do not necessarily have to be identical to the attributes used in the first network. The mapping is based on the subscriber profile, which is transmitted from the first network to the second network.

It is desirable to provide mapping between various types of wireless communication systems to ensure seamless operation across systems while advantageously reducing system traffic.

SUMMARY

The present invention defines a method and WTRU for mapping quality of service requirements between various types of wireless communication systems. The mapping is performed according to the type of systems across which the mapping is being provided.

BRIEF DESCRIPTION OF THE DRAWINGS

Figure 1 illustrates overlapping coverage areas of various types of wireless communication systems.

Figure 2 illustrates a plurality of wireless communication systems wherein a WTRU is capable of operating across the plurality of wireless communication systems while maintaining a required- level of quality of service.

Figures 3 and 4 are embodiments of a WTRU that is capable of mapping - quality of service requirements between various types of communication systems.

Figure 5. is a method wherein quality of service- requirements may be mapped across various types of wireless communication systems.

DETAILED DESCRIPTION OF THE PREFERRED EMBODIMENTS

The present invention is described with reference to the drawing figures wherein like numerals represent like elements throughout.

. It should be noted that the term base station includes but is not limited to a base station, Node-B, site controller, access point .or any other type of interfacing device in a wireless environment. The term wireless transmit/receive unit (WTRU) includes but is not limited to a user equipment, mobile station, fixed or mobile subscriber unit, pager, or any other type of device capable of operating in a wireless environment. The terms system and network are used interchangeably herein as are the terms translate and map when referring to conversion of quality of service (QoS) requirements between various types of wireless communication systems.

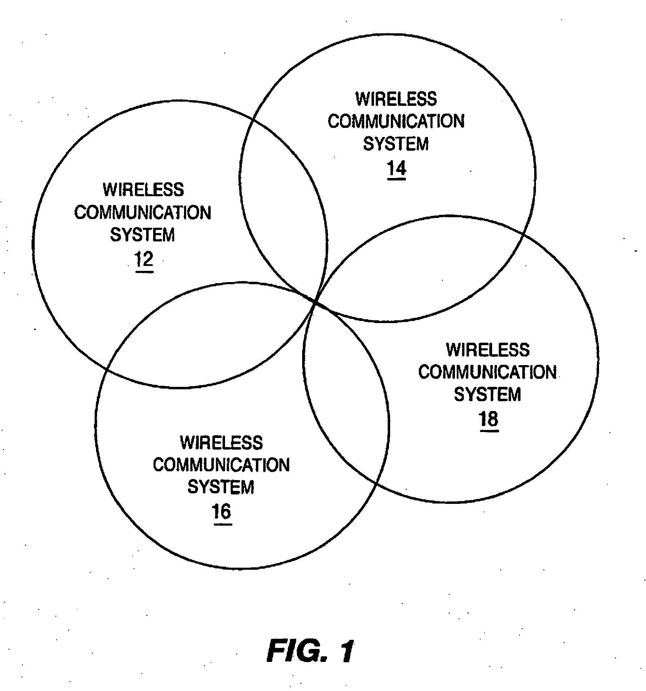

Referring now to Figure 1, there is shown approximate coverage areas for a plurality of different types of wireless communication systems 12, 14, 16, 18. The coverage areas of systems 12, 14, 16, 18 are shown in a particular arrangement, but may, of course, have any type of deployed arrangement based on operator preference. Furthermore, while four types of wireless communication systems are shown for purposes of describing the present invention, there may be any number of types of wireless communication systems.

Each wireless communication system includes a number of service types wherein a particular QoS requirement is set for each service type. Of particular interest are those service types that relate to user data, such as for example bearer services. Bearer services are any type of service that allows transmission of user-information signals between user-network interfaces in a wireless communication system.

At a high level, QoS requirements for bearer services are defined in terms of, for example, maximum transfer delay, delay variation, bit or frame error ratio (i.e., BER or FER), and data rate. Although the QoS requirements for bearer services are generally defined with at least one of these four parameters, there is no standardization of QoS requirements across different types of wireless communication systems. Accordingly, in the present invention, QoS requirements between various types of wireless communication systems are mapped in order to allow seamless operation across the various types of wireless communication systems. The mapping of QoS requirements may be performed in the system itself as part of the handover process, for example, or in the WTRU and may be performed across all types of wireless communication systems whether currently known or later developed.

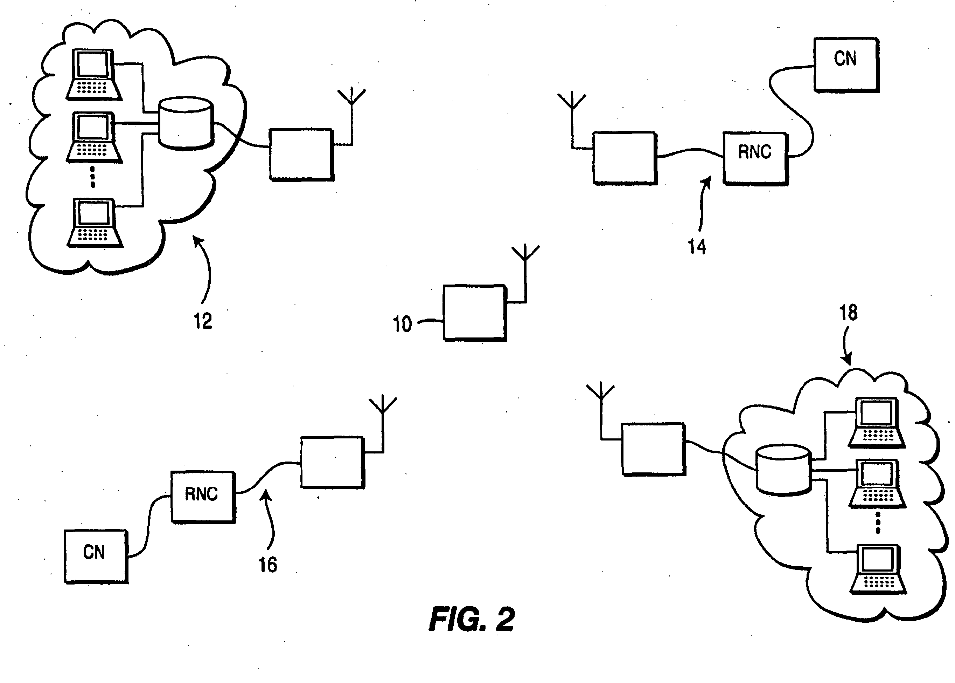

Referring now to Figure 2, examples of different types of wireless communication systems 12, 14, 16, 18 are shown. In this example, systems 12, 18 are wireless local area network (WLAN) type wireless communication systems while systems 14, 16 are cellular type wireless communications systems. WLAN type wireless communication systems include wireless local area networks, wireless personal area networks, metropolitan area networks, Bluetooth, 802.11, or the like and are collectively referred to as WLAN type wireless communication systems. Cellular type wireless communication systems include any type of cellular type system including UMTS-FDD, UMTS-TDD, EDGE, GSMIGPRS, CDMA 2000, and TD-SCDMA, for example and are collectively referred to as cellular type wireless communication systems. In this embodiment, WTRUs such as WTRU 10 are capable of seamless operation across the various wireless communication systems 12, 14, 16, 18.

For example, assume WTRU 10 is utilizing a conversational voice application or service in system 14 which for purposes of this example is a CDMA 2000 system and switches, for whatever reason, to system 16 which again for purposes of this example is a UMTS system. In such a scenario, the QoS requirements of a conversational voice application are defined differently in CDMA 2000 than they are in UMTS. Therefore, to continue running the conversational voice application (i.e., maintain the user's telephone conversation) the WTRU 10 is configured with an interface such as a QoS translator so that the QoS requirements which are specified in CDMA 2000 language are translated to UMTS language.

It should be noted that the QoS translator may be utilized to ensure seamless operation between any two types of wireless communication systems. By way of example, an explanation of a WTRU operating across a UMTS system and a WLAN type wireless communication system is provided below.

Referring still to Figure 2, assume system 16 is a UMTS system and WTRU 10 has an ongoing interactive game application running in UMTS on system 16 and further that WTRU 10 is going to handover to system 18 which is a WLAN type system.

As mentioned above, wireless communication systems have specific QoS definitions for each service type and use different languages when transmitting information over their respective bearer service. By way of example, in UMTS, delay and BER requirements are often defined as shown in the table below (i.e., table 1) taken from 3^{rd} Generation Partnership Project Technical Specification (3GPP TS) 22105 v620.

**Table 1.**

| | Real Time (Constant Delay) | Non Real Time (Variable Delay) |
|---|---|---|
| Operating environment | BER/Max Transfer Delay | BER/Max Transfer Delay |
| Satellite (Terminal relative speed to ground up to 1000 km/h for plane) | Max Transfer Delay less than 400 ms BER 10-3 - 10-7 (Note 1) | Max Transfer Delay 1200 ms or more (Note 2) BER = 10-5 to I G-8 |
| Rural outdoor (Terminal relative speed to ground up to 500 km/h) (Note 3) | Max Transfer Delay 20 - 300 ms BER 10-3-10-7 (Note 1) | Max Transfer Delay 150 ms or more (Note 2) BER =10-5 to 10-8 |
| Urbane Suburban outdoor (Terminal relative speed to ground up to 120 km/h) | Max Transfer Delay 20 - 300 ms BER 10-3 - 10-7 (Note 1) | Max Transfer Delay 150 ms or more (Note 2) BER = 10-5 to 10-8 |
| Indoor/ Low range outdoor (Terminal relative speed to ground up to 10 km/h) | Max Transfer Delay 20 - 300 ms BER 10-3 10-7 (Note 1) | Max Transfer Delay 150 ms or more (Note 2) BER =10-5 to 10-8 |
| NOTE 1: There is likely to be a compromise between BER and delay. | | |
| NOTE 2: The Max Transfer Delay should be here regarded as the target value for 95% of the data. | | |
| NOTE 3: The value of 500 km/h as the maximum speed to be supported In the rural outdoor environment was selected in order to provide service on high speed vehicles (e.g. trains). This is not meant to be the typical value for this environment (250 km/h is more typical). | | |

Similarly, QoS may also be defined in terms of the end user experience for real-time, interactive games, and streaming applications. By way of example, table 2, shown below, lists the end user QoS targets for UMTS and is also taken from 3GPP TS 22105 v620.

**Table 2.**

| Medium | AppHcatton | Degree of symmetry | Data rate | Key performance parameters and target values | | |
|---|---|---|---|---|---|---|
| | | | | End-to-end One-way Delay | Delay Variation within a call | Information loss |
| Audio | Conversational voice | Two-way | 4-25 kb/s | <150 msec preferred <400 msec limit Note 1 | < 1 msec | < 3% FER |
| Video | Videophone | Two-way | 32-384 kWs | < 150 msec preferred <400 msec limit Lip-synch:< 100 msec | | < 1% FER |
| Data | Telemetry - two-way control | Two-way | <28.8 kb/s | < 250 msec | N/A | Zero |
| Data | Interactive games | Two-way | < 1 KB | < 250 msec | N/A | Zero |
| Data | Telnet | Two-way (asymmetric) | <1KB | < 250 msec | N/A | Zero |

In the current example, therefore, the exemplary QoS definitions in the above table for interactive games will have to be translated (i.e., mapped) to whatever definitions are used by system 18. Translation of the interactive games QoS requirements will enable the interactive game to continue despite the user switching to the WLAN type system 18.

The translation or mapping between various types of wireless communication systems may be performed in any manner, as desired, with the important point being that such mapping occurs. Purely by way of example, the following table (i.e., table 3) shows a possible mapping of QoS requirements between a UMTS system and a WLAN type system. This table assumes system 18 is an 802.1.1 type network, but as mentioned the system 18 may be any type of WLAN. type system.

**Table 3.**

| **802.11 e Parameter** | **Possible Mapping from UMTS QoS Classes** |
|---|---|
| Traffic Type (TS Info) | 1: Conversational |
| | 0: Streaming, Interactive. Background |
| Ack Policy (TS Info) | No acknowledgement: Conversational. Streaming Acknowledgement: Interactive. Background |
| FEC (TS Info) | N/A |
| User Priority (0-7) (TSinfo) | 2 : Conversational |
| | 3: Streaming |
| | 4.5.6: Interactive (Traffic Handling Priorities) |
| | 7 (Lowest): Background |
| Direction (TS Info) | Uplink/Downlink |
| Inactivity Interval | N/A |
| Nominal MSDU Size | N/A (23.107 defines maximum SDU size) |
| Minimum Data Rate | Guaranteed bit rate |
| Mean Data Rate | N/A |
| | |
| Maximum Burst Size | Maximum SDU size . |
| Minimum Tx Rate | N/A |
| Delay Boundary | Transfer Delay, if applicable |
| Jitter Boundary | N/A |

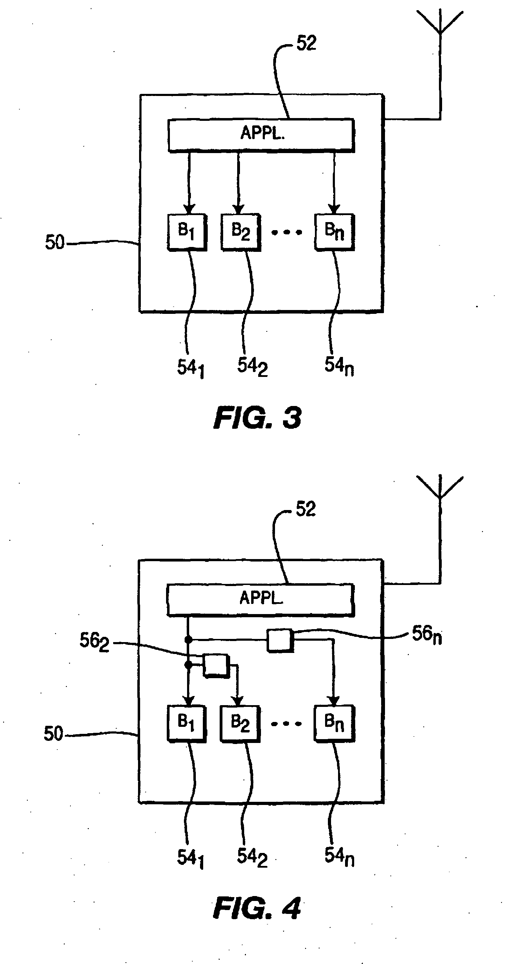

It is important to note that the mapping may be performed not only in a WTRU, but may also be performed in the system itself. Of course, when performed in the system, the mapping may be performed in any system component as desired. Figures 3 and 4 are examples wherein translation of QoS requirements is performed in the WTRU and are described below.

Referring now to Figure 3, there is shown a WTRU 50 wherein QoS requirements of various wireless communication systems may be mapped across various types of wireless communication systems. The WTRU 50 includes an application 52 and a plurality of bearers 54₁, 54₂, and 54n, which will be collectively referred to using reference numeral 54. In this embodiment, the application 52 includes the mapping functionality. That is, in the example outlined above, prior to handover the user is operating in the LTMTS system 16. Therefore, the application 52 is providing QoS requirements to the UMTS bearer, say bearer 54₁, and those QoS requirements are defined according to UMTS specifications. Once the user hands over to the WLAN type system 18, another bearer, say bearer 54₂, is used to transmit information in system 18. However, information transmission in the WLAN type system 18 has different QoS definitions that must now be utilized when transmitting information over bearer 54₂. This is a problem in that because the application was initiated while operating in the UMTS system 16, the application 52 is speaking in terms of UMTS. Therefore, to continue running the application when the user hands over to system 18, the application stops sending information over bearer 54₁ using UMTS QoS definitions and begins sending information over bearer 542 using appropriate QoS definitions for WLAN type system 18. It should be noted that, as mentioned, system 18 may be any type of WLAN type system and therefore the appropriate QoS definitions may vary accordingly. It should also be noted that the number of bearers 54 that are provided preferably corresponds to the number of system types across which a WTRU may operate seamlessly. Preferably, the application is configured to translate between every system type for which a bearer, or the like, is provided.

Referring now to Figure 4, another embodiment is shown wherein the WTRU 50 is again capable of operating seamlessly across any number of various types of wireless communication systems, as desired. In this embodiment, the translation or mapping functionality is separate from the application 52. This arrangement may be preferred in that the application may operate as normal without also being responsible for translating QoS requirements for various types of wireless communication systems.

In this embodiment, translators 56₂, 56ₙ are provided between the application and, preferably, each bearer except one. Therefore, in situations where application 52 is initiated in a particular type of system, say CDMA 2000, and the user continues operating in that system, the application 52 may communicate directly with bearer 54₁ without having to translate the CDMA 2000 QoS requirements. This is preferably how service is provided in any type of wireless communication system where the user is not going to handover from one system type to another system type. That is, if WTRU 50 was to switch from CDMA 2000 to UMTS, for example, and initiate a UMTS application, application 52 and bearer 54₁ would then communicate directly using UMTS QoS requirements.

Where users do handover from one system type to another system type, the application 52 will communicate with the respective bearer of the system to which the user is handing over to. Furthermore, the application 52 will continue running as normal, but its communication with the respective bearer will be appropriately translated prior to receipt by the respective bearer. For example, assuming a handover from a GSM system to an 802.11 network, once handover occurs, communication from application 52 is routed to the 802.11 bearer, say bearer 54ₙ. Although the application was initiated while the user was operating in a GSM system, and therefore the application is specifying QoS requirements in terms of GSM, those QoS requirements are translated by bearer 54ₙ's respective translator 56ₙ thereby providing the user with seamless operation across the GSM and 802.11 systems.

Where a handover between different system types occurs and the translation or mapping function is performed in the system itself, the bearer continues to be specified in terms of the system from which the handover occurred. The system to which the user is handing over to, however, recognizes that the QoS requirements are being communicated to it based on definitions from another type of wireless communication system (or are inadequately defined) and translates them appropriately. This enables whatever application or service that was initiated by a user in one system type to continue seamlessly despite the user handing over to another system type. This arrangement also does not require the WTRU that is handing over, to be configured as explained in Figures 3 and 4, for example.

As previously mentioned, mapping of QoS requirements may be performed in any system component as desired. By way of example, however, in cellular type wireless communication systems, the mapping may occur in the core network in either, again by way of example, the serving GPRS support node (SGSN) or the home location register (HLR). Of course, in such systems, the mapping may also be performed in the base station or radio network controller (RNC). With respect to WLAN type systems, the mapping may again be performed in any system component as desired. By way of example, the mapping may be performed in an access point, access router, or computer network portion of such systems.

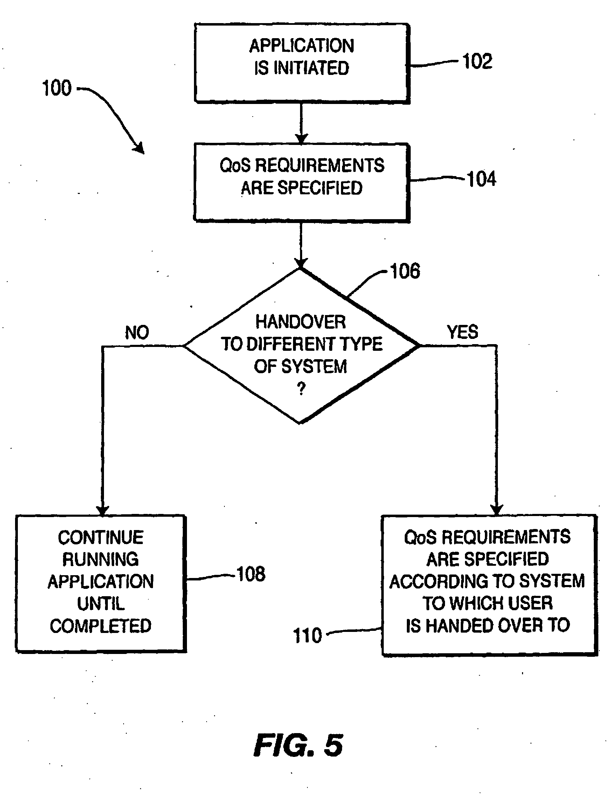

Referring now to Figure 5, a method 100 is shown for mapping QoS requirements between various types of wireless communication systems. In step 102, the method 100 begins wherein an application or service is initiated in a particular type of wireless communication system. Then, in step 104, QoS requirements are specified on a bearer, or the like, in accordance with the QoS. requirements of the particular type of wireless communication system in which the application was initiated.

In step 106, it is determined whether there is handover to another type of wireless communication system. If not determined, the method 100 proceeds to step 108 wherein the application or service continues until completed or otherwise ended. If determined, the method 100 proceeds to step 110 wherein QoS requirements are specified in accordance with the QoS requirements of the wireless communication system to which the user is handed over to. This enables a connection and/or session to continue seamlessly from one system type to another.

. If translation occurs in the WTRU, the QoS requirements are specified on a bearer, or the like, in accordance with the QoS requirements of the system to which the user is handing over to. If translation occurs in the system, the QoS requirements are specified on a bearer, or the like, according to the QoS requirements of the system from which the user is handing over from and the system which the user is handing over to performs the appropriate translation.

Although the present invention has been described in conjunction with particular types of wireless communication systems, the present invention is not limited thereto and instead may be implemented across all types of wireless communication systems. Furthermore, although cellular and WLAN type systems were mentioned, other types of wireless communication systems such as, for example, infrared are certainly within the scope of the present invention.

In addition to the above, while the present invention has been described in terms of various embodiments, other variations, which are within the scope of the invention as outlined in the claims below will be apparent to those skilled in the art.

## Claims

1. A wireless transmit/receive unit (WTRU, 50) configured for seamless operation across various types of wireless communication systems (12, 14, 16, 18), said WTRU being **characterized in that** it is arranged to translate quality of service requirements across various types of wireless communication systems and **in that** it comprises:
at least one application (52) for performing a wireless service; and
at least one bearer (54) for transmitting, between user-network interfaces, user-information signals related to the translated quality of service requirements.

2. The WTRU (50) of claim 1, wherein said at least one application (52) is arranged to perform the translation of quality of service requirements.

3. The WTRU (50) of claim 2, wherein the application (52) is configured to receive incoming quality of service requirements specified according to one type of wireless communication system and translate the requirements to output the requirements according to another type of wireless communication system.

4. The WTRU (50) of claim 3 further including a plurality of bearers (54), wherein the number of bearers corresponds to the number of wireless communication systems that the application is capable of translating.

5. The WTRU (50) of claim 1, further comprising:
at least one translator (56) between the application (52) and the bearer (54) for performing the translation of quality of service requirements, whereby sessions established in a first wireless communication system may continue when the WTRU hands over to other various types of wireless communication systems.

6. The WTRU (50) of claim 5, wherein the translator (56) is configured to receive incoming quality of service requirements specified according to one type of wireless communication system and translate the requirements to output the requirements according to another type of wireless communication system.

7. The WTRU (50) of claim 5, further being arranged to receive and route incoming quality of service requirements to an appropriate translator (56) and bearer (54) to continue operation of the application (52) while hand over is made between various types of wireless communication systems.

8. The WTRU (50) of any one of claims 2 or 5, further being arranged to hand over from a first cellular type wireless communication system to a second cellular type wireless communication system and translate quality of service requirements of the first system to that of the second system in order to continue a service initiated in the first system.

9. The WTRU (50) of claim 8, further being arranged to transmit translated quality of service requirements over a bearer service corresponding to the second system.

10. The WTRU (50) of claim 8, wherein the first cellular type wireless communication system is a UMTS system and the second cellular type wireless communication system is a CDN1A 2000 system.

11. The WTRU (50) of any one of claims 2 or 5, wherein the second system is a wireless local area network (WLAN) type wireless communication system.

12. The WTRU (50) of any one of claims 2 or 5, wherein the first system is a wireless local area network (WLAN) type wireless communication system.

13. A method for providing seamless handover between various types of wireless communication systems (12, 14, 16, 18), the method being **characterized in that** it comprises the steps of
initiating (102) an application (50) in a wireless transmit/receive unit. (WTRU, 50) in a first type of wireless communication system;
requesting (106) handover of the WTRU from the first system to a second type of wireless communication system;
translating (110), in the WTRU, quality of service requirements from the specifications of the first system to the specifications of the second system;
handing (110) over the WTRU to the second system; and
continuing in the second system the application that was initiated in the first system, wherein the application is continued with the quality of service requirements specified according to the specifications of the second system.

14. The method of claim 13, wherein the application (50) is continued in the second system using a bearer (54) that corresponds to the second system.

## Patentansprüche

1. Drahtlose Sende/Empfangseinheit (WTRU, 50), die für den nahtlosen Betrieb über verschiedene Arten drahtloser Kommunikationssysteme (12, 14, 16, 18) aufgebaut ist, wobei die WTRU **dadurch gekennzeichnet ist, daß** sie eingerichtet ist, Dienstqualitätsanforderungen über verschiedene Arten drahtloser Kommunikationssysteme zu übersetzen, und dass sie aufweist:
zumindest eine Anwendung (52) zum Ausführen eines drahtlosen Dienstes; und
zumindest einen Träger (54) zum Übertragen von Benutzerinformationssignalen, welche die übersetzten Dienstqualitätsanforderungen betreffen, zwischen Benutzernetzschnittstellen.

2. WTRU (50) nach Anspruch 1, wobei zumindest eine Anwendung (52) eingerichtet ist, um die Übersetzung der Dienstqualitätsanforderungen durchzuführen.

3. WTRU (50) nach Anspruch 2, wobei die Anwendung (52) derart aufgebaut ist, daß sie ankommende Dienstqualitätsanforderungen empfängt, die gemäß einer Art von drahtlosem Kommunikationssystem spezifiziert sind, und die Anforderungen übersetzt, um die Anforderungen gemäß einer anderen Art von drahtlosem Kommunikationssystem auszugeben.

4. WTRU (50) nach Anspruch 3, die ferner mehrere Träger (54) umfaßt, wobei die Anzahl von Trägern der Anzahl drahtloser Kommunikationssysteme entspricht, zu deren Übersetzung die Anwendung fähig ist.

5. WTRU nach Anspruch 1, die ferner aufweist:
zumindest einen Übersetzer (56) zwischen der Anwendung (52) und dem Träger (54) zum Durchführen der Übersetzung der Dienstqualitätsanforderungen, wobei die in einem ersten drahtlosen Kommunikationssystem eingerichteten Sitzungen fortgesetzt werden können, wenn die WTRU zu anderen verschiedenen Arten drahtloser Kommunikationssysteme übergeben wird.

6. WTRU (50) nach Anspruch 5, wobei der Übersetzer (56) derart aufgebaut ist, daß er ankommende Dienstqualitätsanforderungen, die gemäß einer Art von drahtlosem Kommunikationssystem spezifiziert sind, empfängt und die Anforderungen übersetzt, um die Anforderungen gemäß einer anderen Art von drahtlosem Kommunikationssystem auszugeben.

7. WTRU (50) nach Anspruch 5, die ferner eingerichtet ist, ankommende Dienstqualitätsanforderungen zu empfangen und an einen passenden Übersetzer (56) und Träger (54) leitwegzulenken, um den Betrieb der Anwendung (52) fortzusetzen, während die Übergabe (Handover) zwischen verschiedenen Arten drahtloser Kommunikationssystem durchgeführt wird.

8. WTRU (50) nach einem der Ansprüche 2 oder 5, die ferner eingerichtet ist, von einem ersten zellularen drahtlosen Kommunikationssystem an ein zweites zellulares drahtloses Kommunikationssystem zu übergeben und Dienstqualitätsanforderungen des ersten Systems auf die des zweiten Systems zu übersetzen, um einen in dem ersten System begonnenen Dienst fortzusetzen.

9. WTRU (50) nach Anspruch 8, die ferner eingerichtet ist, um die übersetzten Dienstqualitätsanforderungen über einen Trägerdienst zu übertragen, der dem zweiten System entspricht.

10. WTRU (50) nach Anspruch 8, wobei das erste zellulare drahtlose Kommunikationssystem ein UMTS-System ist und das zweite zellulare drahtlose Kommunikationssystem ein CDMA 2000-System ist.

11. WTRU (50) nach einem der Ansprüche 2 oder 5, wobei das zweite System ein drahtloses lokales Netzwerk-(WLAN-) Kommunikationssystem ist.

12. WTRU (50) nach einem der Ansprüche 2 oder 5, wobei das erste System ein drahtloses lokales Netzwerk-(WLAN-) Kommunikationssystem ist.

13. Verfahren zur Bereitstellung einer nahtlosen Übergabe zwischen verschiedenen Arten drahtloser Kommunikationssysteme (12, 14, 16, 18), wobei das Verfahren **dadurch gekennzeichnet ist, daß** es die folgenden Schritte aufweist:
Einleiten (102) einer Anwendung (50) in einer drahtlosen Sende/Empfangseinheit (WTRU, 50) in einer ersten Art von drahtlosem Kommunikationssystem;
Anfordern (106) einer Übergabe der WTRU von dem ersten System an eine zweite Art von drahtlosem Kommunikationssystem;
Übersetzen (110) der Dienstqualitätsanforderungen von den Spezifikationen des ersten Systems auf die Spezifikationen des zweiten Systems in der WTRU; und
Übergeben (110) der WTRU an das zweite System; und
Fortsetzen der in dem ersten System begonnenen Anwendung in dem zweiten System, wobei die Anwendung mit den Dienstqualitätsanforderungen, die gemäß den Spezifikationen des zweiten Systems spezifiziert sind, fortgesetzt wird.

14. Verfahren nach Anspruch 13, wobei die Anwendung (50) in dem zweiten System unter Verwendung eines Trägers (54) fortgesetzt wird, der dem zweiten System entspricht.

## Revendications

1. Unité d'émission/réception sans fil (WTRU, 50) configurée pour un fonctionnement continu dans différents types de systèmes de communication sans fil (12, 14, 16, 18), ladite WTRU étant **caractérisée en ce qu'**elle est agencée pour traduire les exigences en matière de qualité de service entre plusieurs types de systèmes de communication sans fil et **en ce qu'**elle comprend :
au moins une application (52) permettant d'assurer un service sans fil ; et
au moins un service support (54) permettant de transmettre, entre des interfaces de réseau utilisateur, des signaux d'information utilisateur liés aux exigences en matière de qualité de service traduites.

2. WTRU (50) selon la revendication 1, dans laquelle ladite au moins une application (52) est agencée pour exécuter la traduction des exigences en matière de qualité de service.

3. WTRU (50) selon la revendication 2, dans laquelle l'application (52) est configurée pour recevoir les exigences en matière de qualité de service entrantes spécifiées en fonction d'un type de système de communication sans fil et traduire les exigences pour sortir les exigences selon un autre type de système de communication sans fil.

4. WTRU (50) selon la revendication 3, comportant en outre une pluralité de services support (54), dans laquelle le nombre de services support correspond au nombre de systèmes de communication sans fil que l'application est en mesure de traduire.

5. WTRU (50) selon la revendication 1, comprenant en outre :
au moins un traducteur (56) entre l'application (52) et le service support (54) pour effectuer la traduction des exigences en matière de qualité de service, grâce à quoi les sessions établies dans un premier système de communication sans fil peuvent se poursuivre lorsque la WTRU effectue un transfert vers d'autres types divers de systèmes de communication sans fil.

6. WTRU (50) selon la revendication 5, dans laquelle le traducteur (56) est configuré pour recevoir les exigences en matière de qualité de service entrantes spécifiées en fonction d'un type de système de communication sans fil et traduire les exigences pour sortir les exigences en fonction d'un autre type de système de communication sans fil.

7. WTRU (50) selon la revendication 5, agencés en outre pour recevoir et acheminer les exigences en matière de qualité de service entrantes vers un traducteur (56) et un service support (54) appropriés pour poursuivre le fonctionnement de l'application (52) tandis que le transfert est effectué entre différents types de systèmes de communication sans fil.

8. WTRU (50) selon l'une quelconque des revendications 2 ou 5, agencée en outre de manière à effectuer un transfert d'un premier système de communication sans fil de type cellulaire à un deuxième système de communication sans fil de type cellulaire et traduire les exigences en matière de qualité de service d'un premier système en celles du deuxième système afin de poursuivre un service initié dans le premier système.

9. WTRU (50) selon la revendication 8, agencée en outre pour transmettre les exigences en matière de qualité de service traduites sur un service support correspondant au deuxième système.

10. WTRU (50) selon la revendication 8, dans laquelle le premier système de communication sans fil de type cellulaire est un système UMTS et le deuxième système de communication sans fil de type cellulaire est un système CDMA 2000.

11. WTRU (50) selon l'une quelconque des revendications 2 ou 5, dans laquelle le deuxième système est un système de communication sans fil de type à réseau local sans fil (WLAN).

12. WTRU (50) selon l'une quelconque des revendications 2 ou 5, dans lequel le premier système est un système de communication sans fil de type à réseau local sans fil (WLAN).

13. Procédé permettant d'assurer un transfert continu entre plusieurs types de systèmes de communication sans fil (12, 14, 16, 18), le procédé étant **caractérisé en ce qu'**il comprend les étapes consistant à :
initier (102) une application (50) dans une unité d'émission/réception sans fil (WTRU, 50) dans un premier type de système de communication sans fil ;
demander (106) le transfert de la WTRU d'un premier système à un deuxième système de communication sans fil ;
traduire (110), dans la WTRU, les exigences en matière de qualité de service des spécifications du premier système aux spécifications du deuxième système ;
transférer (110) la WTRU vers le deuxième système ; et
poursuivre dans le deuxième système l'application qui avait été initiée dans le premier système, l'application se poursuivant avec les exigences en matière de qualité de service spécifiées en fonction des spécifications du deuxième système.

14. Procédé selon la revendication 13, dans lequel l'application (50) se poursuit dans le deuxième système à l'aide d'un service support (54) qui correspond au deuxième système.
